# EUROPÄISCHE PATENTSCHRIFT

(11) **EP 1 262 922 B1**
(45) Veröffentlichungstag und Bekanntmachung des Hinweises auf die Patenterteilung: **28.11.2012**
(21) Anmeldenummer: 02011819.6
(22) Anmeldetag: 28.05.2002
(51) Int. Cl.: G07C 3/00, H02K 15/00

(54) **Lebensdauerüberwachung an Umwälzpumpen**
Life cycle surveillance of circulation pumps
Surveillance de la durée de vie de pompes de circulation

(30) Priorität: 31.05.2001 DE 10126733
(43) Veröffentlichungstag der Anmeldung: 04.12.2002
(73) Patentinhaber: WILO SE, 44263 Dortmund (DE)
(72) Erfinder: Strelow, Günter, 44801 Bochum (DE)
(74) Vertreter: Cohausz Hannig Borkowski Wißgott

(56) Entgegenhaltungen:
- EP-A- 0 189 021
- EP-A- 0 608 919
- DE-A- 4 107 207
- US-A- 3 593 012
- US-A- 4 525 763
- PATENT ABSTRACTS OF JAPAN Bd. 0103, Nr. 47 (E-457), 21. November 1986 (1986-11-21) -& JP 61 150305 A (TOSHIBA CORP), 9. Juli 1986 (1986-07-09)

## Beschreibung

Die vorliegende Erfindung betrifft ein Verfahren zur Überwachung der Konstitution eines Aggregats bestehend aus einer elektronisch geregelten Umwälzpumpe und einem diese antreibenden Elektromotor, wobei mittels an dem Aggregat angebrachtet Sensoren eine Temperatur sowie die Drehzahl und/oder die Stromaufnahme und/oder der Druck gemessen werden und wobei die Meßwerte zur späteren Verwendung registriert werden. Die vorliegende Erfindung betrifft ebenso ein Aggregat zur Umsetzung des Verfahrens.

Es ist von elektrisch betriebenen Kreiselpumpen bekannt, deren Betrieb durch Sensoren zu überwachen und die Pumpen zur Vermeidung größerer Schäden bei einer Fehlfunktion abzuschalten. Dabei ist es auch bekannt, die Fehlerhistorie, also die zeitliche Abfolge des Auftretens solcher Fehler, abzuspeichern und dem Servicepersonal zugänglich zu machen. So kann bei bekannten Pumpen jede Überschreitung von maximal zulässigen Betriebsbedingungen, wie z. B. die Überschreitung maximaler Temperaturen im Motor oder in der Elektronik, eine Unter- oder Überspannung oder jede Blockierung registriert und in der Historie registriert werden.

Alle derartigen bekannten Verfahren zur Überwachung der Konstitution haben jedoch den Nachteil, daß die von ihnen verursachten Effekte, wie beispielsweise das Abschalten des Motors, nur durch die aktuell vorliegenden Betriebszustände initiiert sind. So findet das Abschalten nur statt, wenn ein Grenzwert überschritten ist. Mitunter ist es dann zu spät und ein schwer zu behebender Folgeschaden ist entstanden. Zudem ist es nachteilig, daß das Servicepersonal durch persönliche Beurteilung der Fehlerhistorie sich ein Bild von der momentanen Konstitution des Aggregates verschaffen muß und dieses Bild stark von subjektiven Überlegungen und Erfahrungen geprägt sein kann. Für den Servicefachmann ist es denn auch kaum erkennbar, wie weit der Alterungsprozeß des Aggregates oder einer Komponente tatsächlich fortgeschrittenen ist und wieviel Zeit an Restlebensdauer noch verbleibt.

Die Druckschriften EP 0 189 021 und DE 41 07 207 offenbaren bekannte Verfahren zur Überwachung der Konstitution eines Aggregats bzw. eines Elektromotors. Gemäß EP 0 189 021 wird ein Durchflusssignal sowie ein Drucksignal über eine vorgegebene Integrationszeit integriert um Informationen über den Zustand und die zu erwartende Restlebensdauer zu gewinnen. Gemäß DE 41 07 207 wird aus einem Temperaturmesswert ein Lebensdauerverbrauch ermittelt, der diesem Verbrauch entsprechende Motorschutz- und/oder Motorführungsentscheidungen ermöglicht.

Die Druckschrift EP 0 608 919 offenbart ein Verfahren zur adaptiven Kontrolle eines Pumpenaggregats, wobei die Schlupfströmungszahl des Aggregats ständig an die sich ändernde Konstitution des Aggregats (Verschleiß, Geräusch, Temperatur und Schwingung) angepasst wird.

Aufgabe der vorliegenden Erfindung ist es, ein Verfahren der genannten Art zu schaffen, das auf einfache und zuverlässige Weise Rückschlüsse auf die aktuelle Konstitution und die verbleibende Restlebensdauer eines Aggregates möglich macht. Zudem ist es Aufgabe der Erfindung, ein Aggregat zur Umsetzung des Verfahrens zu schaffen.

Diese Aufgaben werden durch ein Verfahren nach Anspruch 1 und ein Aggregat nach Anspruch 6 gelöst.

Ein wesentlicher Gedanke der Erfindung liegt darin, durch das erfindungsgemäße Verfahren eine Art Betriebsstundenzähler ("Kilometerzähler") für das Aggregat zu realisieren, wobei dessen Funktion nicht auf das Aufsummieren der Laufzeit beschränkt ist, sondern zudem wichtige Betriebsparameter registriert. Es wäre beispielsweise möglich einerseits die Betriebsstunden und andererseits die Temperatur eines Bauteiles aus Kunststoff kontinuierlich zu messen und aus beiden Größen den aktuellen Wert der "Temperaturstunden" zu ermitteln. Ein solcher Wert läßt Rückschlüsse auf die noch verbleibende Lebensdauer zu, wenn für das Bauteil die zu erwartende durchschnittliche Lebensdauer bezüglich der "Temperaturstunden" bekannt ist. Aus einem solchen Integral wird dann erfindungsgemäß ein das momentane Alter des Aggregates charakterisierender Wert, der hier als Konstitution bezeichnet wird, berechnet. Dieser wird, um Information bezüglich der zu erwartenden Lebensdauer zu bekommen, in Relation zu einem zuvor festzulegenden Maximalwert gesetzt. Bei einer Annäherung des momentanen "Alters" an die zu erwartende Lebensdauer zumindest eines Bauteiles kann erfindungsgemäß eine Warnfunktion aktiviert werden, um einem zu erwartenden Schadensfall zu begegnen.

Die interessanten Größen eines oder mehrerer Betriebsparameter werden somit erfindungsgemäß über einen definierten Zeitraum integriert und aus dem (den) Integral(en) werden Rückschlüsse auf die Konstitution des Aggregates, im Sinne des aktuellen Lebensalters des Aggregates bezüglich der gemessenen Größen, gezogen. Als interessante Größen kommen neben der Temperatur beispielsweise auch der Druck und/oder die Drehzahl in Betracht. In anderen Worten ist es die Idee der Erfindung, eine Integration der im Betrieb auftretenden Belastung als Funktion der Zeit und damit des Einflusses auf die Lebensdauer der Bauteile durchzuführen. Diese Daten werden in der Elektronik gespeichert und können über eine Schnittstelle oder ein Display ausgelesen werden. Das Verfahren wird vorteilhafter Weise neben den bekannten Verfahren, die beispielsweise ein Abschalten bei Überschreitung einer Grenze realisieren, eingesetzt.

Die Vorteile der Erfindung, die sich besonders gut bei elektronisch geregelten Umwälzpumpen einsetzen läßt, liegen in der Schadensfrüherkennung. So können Bauteile, deren Lebensdauer sich dem Ende zuneigt, ausgetauscht werden, bevor es zu schwerwiegenden Folgeschäden kommt. Die Austauschempfehlung kann dabei von dem Servicepersonal oder direkt von der Elektronik über ein Display oder ein Warnsignal ausgegeben werden. Es ist von besonderem Vorteil, daß sich das erfindungsgemäße Verfahren auch in die elektronische Regelung integrieren läßt. So können beispielsweise die vorgebbaren Sollgrößen abgesenkt werden, wenn durch Reduzierung der Belastung eine Erhöhung der Lebenserwartung erreicht werden und ein aktuell drohender Schaden vermieden werden kann. Ein weiterer Vorteil der Erfindung ist, daß mit dem Verfahren Kenntnis bezüglich der wahren im Feld existierenden Betriebs- und Belastungsbedingungen erlangt werden können.

Als interessante Bauteile kommen vor allem Teile aus Kunststoff in Betracht, deren Alterungsprozeß stark -nämlich exponentiell- von den herrschenden Temperaturen beeinflußt wird. Wird als Betriebsparameter eine Temperatur gemessen, so kann das Integral eine Temperaturbelastung repräsentieren.

Beispielsweise ist zu beobachten, daß die Druckstabilität in logarithmischer Form mit der Zeit abnimmt, wobei der Grad der Abnahme mit steigender Temperatur wächst.

Im Hinblick auf einzelne Bauteile ob aus Kunststoff oder Metall ist es auch interessant, die Aggressivität der die Teile beaufschlagenden Medien zu bestimmen. So kann es vorteilhaft sein, den PH-Wert des von einer Pumpe zu befördernden Mediums über die Zeit zu beobachten. Auch können die Mediumtemperatur und/oder der statische Druck gemessen oder der Betriebspunkt der Pumpe im Q-H Diagramm ermittelt werden. Aus den Integralen der Daten können Rückschlüsse auf den Verschleiß von Laufrädern durch Kavitation gezogen werden. Die Beobachtung des Betriebspunktes läßt Rückschlüsse auf die Lagerbelastung zu. So ist die Belastung im optimalen Betriebspunkt am geringsten. Im Hinblick auf den Verschleiß von Wellen und Lagern ist es auch empfehlenswert, die Laufzeit, die Drehzahl, die Laufleistung ("Kilometer") oder die Medientemperatur zu messen und zu integrieren, um die noch zu erwartende Lebensdauer abschätzen zu können. Bei elektronischen Bauteilen kann aufgrund der integrierten Temperatur oder der integrierten Stromaufnahme auf die aktuelle Konstitution geschlossen werden.

Um die verbleibende Lebensdauer einer interessanten Komponente oder des Aggregates ermitteln zu können, ist es vorteilhaft, als definierten Zeitraum die Gesamtlaufzeit heranzuziehen. Diese ist, ähnlich wie die Gesamtlaufleistung eines PKW, eine das fragliche Aggregat charakterisierende Größe. Ist das Augenmerk jedoch auf eine einzelne Komponente, beispielsweise ein Pumpengehäuse gerichtet, ist es vorteilhaft, die für das Integral maßgebliche Laufzeit mit dem letzten Austausch der Komponente beginnen zu lassen. Der "Kilometerzähler" wird somit beim Austausch der Komponente wieder auf Null gesetzt. So können für ein Aggregat mehrere Integrale -für jede interessante Komponente einesgleichzeitig ermittelt werden. Als Betriebsparameter kann entsprechend dem PKW auch bei einem Aggregat die Laufleistung als ein von der Zahl der tatsächl ichen Umdrehungen abhängiger Parameter gemessen werden.

Um einen möglichst genauen und zuverlässigen Wert eines Integrales zu erhalten, ist es vorteilhaft, die interessanten Betriebsparameter kontinuierlich, in Praxis also in möglichst kleinen zeitlichen Intervallen, zu messen und zu registrieren. Dabei kann die Länge der Intervalle entsprechend der zu erwartenden Veränderlichkeit der Größe angepaßt sein, um die Effizienz der Messung und der Berechnung zu erhöhen. Beispielsweise sollten im Falle einer Pumpe Drücke in kurzen Abständen (Sekunden) gemessen werden, um kurzzeitige Druckspitzen erkennen zu können. Die Intervalle bei der Messung der Medientemperatur kann größer (Minuten) gewählt werden, da sich diese nicht schlagartig ändert und nach einer Änderung einen Wert beibehält. Dabei ist jedoch zu bemerken, daß ein Überschreiten von Extremalwerten nach wie vor ein Abschalten zur Folge hat.

Um das erfindungsgemäße Verfahren umsetzen zu können, muß das Aggregat, insbesondere die Umwälzpumpe, mindestens einen Sensor zur Messung von Betriebsparametern aufweisen. Zudem sind Speichermittel zur Registrierung der gemessenen Betriebsparameter und Integrationsmittel, welche die registrierten Meßwerte eines oder mehrerer Betriebsparameter über einen definierten Zeitraum integrieren, notwendig. Die Speichermittel und die Integrationsmittel können von dem meist ehedem in der Regelelektronik vorhandenen Prozeßrechner realisiert werden. Es kann auch eine aktuelle Integration der interessanten Größe ins Verhältnis zu einem vorgegebenen Grenzwert in dem Sinne erfolgen, daß von Anbeginn bis zum Grenzwert entlang einer vorgegebenen Funktion gezählt wird. Bei Erreichen des Grenzwertes erfolgt eine Warnung.

## Patentansprüche

1. Verfahren zur Überwachung der Konstitution eines Aggregats bestehend aus einer elektronisch geregelten Umwälzpumpe und einem diese antreibenden Elektromotor, wobei mittels an dem Aggregat angebrachter Sensoren eine Temperatur gemessen wird, wobei die Meßwerte zur späteren Verwendung registriert werden, und wobei
- zusätzlich die Drehzahl und/ oder die Stromaufnahme und/ oder der Druck gemessen wird, **dadurch gekennzeichnet,**
- **dass** die Meßwerte über einen definierten Zeitraum integriert werden, und
- **dass** aus den Integralen Rückschlüsse auf das aktuelle Lebensalter des Aggregats gezogen werden und aus den Integralen ein das momentane Alter des Aggregats charakterisierender Wert , d.h. die Konstitution, berechnet und ins Verhältnis zu einem zuvor definierten und eine zu erwartende Lebensdauer charakterisierenden Maximalwert gesetzt wird und
- **dass** die aktuelle Konstitution in die elektronische Regelung der Umwälzpumpe einbezogen wird, wobei zur Reduzierung der Belastung und Erhöhung der Lebenserwartung eine Absenkung vorgebbarer Sollgrößen erfolgt, wenn in Folge der zu Ende gehenden Lebensdauer ein Schaden droht.

2. Verfahren nach Anspruch 1,
**dadurch gekennzeichnet, dass** als definierter Zeitraum die Gesamtlaufzeit oder die dem Austausch einer betriebswesentlichen Komponente folgende Laufzeit herangezogen wird.

3. Verfahren nach Anspruch 1 oder 2,
**dadurch gekennzeichnet, dass** die Meßgrößen kontinuierlich gemessen werden.

4. Verfahren nach einem der vorherigen Ansprüche,
**dadurch gekennzeichnet, dass** bei einer Annährung des momentanen Alters an die zu erwartende Lebensdauer zumindest eines Bauteiles eine Warnfunktion vor einem zu erwartenden Schadensfall aktiviert wird.

5. Verfahren nach einem der vorherigen Ansprüche,
**dadurch gekennzeichnet, dass** als Meßgröße die Temperatur eines Bauteils, insbesondere eines Bauteils aus Kunststoff, gemessen wird und das Integral eine Temperaturbelastung repräsentiert.

6. Aggregat bestehend aus einer elektronisch geregelten Umwälzpumpe und einem diese antreibenden Elektromotor mit Mitteln zur Überwachung seiner Konstitution, aufweisend mindestens einen an dem Aggregat angebrachten Sensor zur Messung einer Temperatur, Speichermittel zur Registrierung der gemessenen Messgrößen und zusätzliche an dem Aggregat angebrachten Sensoren zur Messung der Drehzahl und/ oder der Stromaufnahme und/ oder des Druck, **gekennzeichnet durch** Integrationsmittel, die eingerichtet sind, die registrierten Messwerte der Messgrößen über einen definierten Zeitraum Integrieren, wobei die Mittel zur Überwachung der Konstitution des Aggregats dazu eingerichtet sind, aus den Integralen Rückschlüsse auf das aktuelle Lebensalter des Aggregats zu ziehen und aus den integralen ein das momentane Alter des Aggregats charakterisierenden Wert, d.h. die Konstitution, zu berechnen und ins Verhältnis zu einem zuvor definierten und eine zu erwartende Lebensdauer charakterisierenden Maximalwert zu setzen, und wobei die Umwälzpumpe eine elektronische Regelung aufweist, in die die aktuelle Konstitution einbezogen ist, wobei diese Regelung dazu eingerichtet ist, zur Reduzierung der Belastung und Erhöhung der Lebenserwartung eine Absenkung vorgebbarer Sollgrößen vorzunehmen, wenn in Folge der zu Ende gehenden Lebensdauer ein Schaden droht.

## Claims

1. Method for monitoring the constitution of an assembly comprising an electronically controlled circulation pump and an electric motor which drives the said circulation pump, wherein a temperature is measured by means of sensors which are fitted to the assembly, wherein the measured values are recorded for later use, and wherein the rotation speed and/or the current consumption and/or the pressure are/is additionally measured, **characterized**
- **in that** the measured values are integrated over a defined time period, and
- **in that** conclusions are drawn about the current age of the assembly from the integrals and a value which characterizes the current age of the assembly, that is to say the constitution, is calculated from the integrals and related to a previously defined maximum value which characterizes an expected service life, and
- **in that** the current constitution is included in the electronic control system of the circulation pump, wherein, in order to reduce the loading and increase the life expectancy, prespecifiable setpoint variables are reduced when there is a threat of damage as a result of the service life coming to an end.

2. Method according to Claim 1, **characterized in that** the total run time or the run time following replacement of a component which is essential for operation is used as the defined time period.

3. Method according to Claim 1 or 2, **characterized in that** the measurement variables are measured continuously.

4. Method according to one of the preceding claims, **characterized in that**, as the current age approaches the expected service life of at least one component, a function warning against expected damage is activated.

5. Method according to one of the preceding claims, **characterized in that** the temperature of a component, in particular a component which is composed of plastic, is measured as the measurement variable, and the integral represents a temperature loading.

6. Assembly comprising an electronically controlled circulation pump and an electric motor, which drives the said circulation pump, with means for monitoring the constitution of the said assembly, having at least one sensor, which is fitted to the assembly, for measuring a temperature, memory means for recording the measured measurement variables and additional sensors, which are fitted to the assembly, for measuring the rotation speed and/or the current consumption and/or the pressure, **characterized by** integration means which are designed to integrate the recorded measured values of the measurement variables over a defined time period, wherein the means for monitoring the constitution of the assembly are designed to draw conclusions about the current age of the assembly from the integrals and to calculate a value which characterizes the current age of the assembly, that is to say the constitution, from the integrals and to relate the said value to a previously defined maximum value which characterizes an expected service life, and wherein the circulation pump has an electronic control system in which the current constitution is included, wherein this control system is designed to reduce prespecifiable setpoint variables in order to reduce the loading and increase the life expectancy when there is a threat of damage as a result of the service life coming to an end.

## Revendications

1. Procédé de surveillance de la constitution d'un agrégat composé d'une pompe de circulation à système de réglage électronique et d'un moteur électrique entraînant cette dernière, une température étant mesurée au moyen de capteurs placés au niveau de l'agrégat, les valeurs mesurées étant enregistrées pour utilisation ultérieure et la vitesse de rotation et/ou la réception de courant et/ou la pression étant en outre mesurées ;
**caractérisé en ce que** :
les valeurs mesurées sont intégrées sur une durée définie ; et
des conclusions sur l'âge actuel de l'agrégat sont déduites de l'intégrale et une valeur caractérisant l'âge momentané de l'agrégat, c'est-à-dire sa constitution, est calculée à partir de l'intégrale et mise en relation avec une valeur maximale précédemment définie et une valeur maximale caractérisant la durée de vie attendue est fixée ;
la constitution actuelle est intégrée dans le système de réglage électronique de la pompe de circulation, une réduction des grandeurs théoriques actuelles étant réalisée pour réduire la charge et augmenter la durée de vie lorsqu'une panne risque de se produire en raison d'une durée de vie vieillissante.

2. Procédé selon la revendication 1, **caractérisé en ce que** la durée définie est déduite de la durée de fonctionnement totale ou la durée de fonctionnement suivant l'échange d'un composant essentiel au fonctionnement.

3. Procédé selon la revendication 1 ou 2, **caractérisé en ce que** les grandeurs de mesure sont mesurées en continu.

4. Procédé selon l'une quelconque des revendications précédentes, **caractérisé en ce qu'**à l'approche de l'âge momentané de la fin de vie attendue d'au moins un composant, une fonction d'avertissement est activée avant qu'une panne attendue ne se produise.

5. Procédé selon l'une quelconque des revendications précédentes, **caractérisé en ce que** la grandeur de mesure mesurée est la température d'un composant, notamment d'un composant en matière plastique et que l'intégrale représente une charge thermique.

6. Agrégat composé d'une pompe de circulation à système de réglage électronique et d'un moteur électrique entraînant cette dernière avec des moyens de surveillance de sa constitution, comportant au moins un capteur placé au niveau de l'agrégat pour mesurer une température, des moyens de mémorisation servant à enregistrer les grandeurs de mesure mesurées et des capteurs supplémentaires placés au niveau de l'agrégat servant à mesurer la vitesse de rotation et/ou la réception de courant et/ou la pression, **caractérisé par** la présence de moyens d'intégration conçus pour intégrer les valeurs mesurées enregistrées des grandeurs de mesure sur une durée définie, les moyens de surveillance de la constitution de l'agrégat étant conçus pour déduire de l'intégrale des conclusions concernant l'âge actuel de l'agrégat et pour les mettre en relation avec une valeur maximale précédemment définie et une valeur maximale caractérisant la durée de vie attendue et la pompe de circulation comprenant un système de réglage électronique dans lequel la constitution actuelle est intégrée, ce système de réglage étant conçu pour réduire les grandeurs théoriques prédéfinies pour réduire la charge et augmenter la durée de vie lorsqu'une panne risque de se produire en raison d'une durée de vie vieillissante.
